# FASCICULE DE BREVET EUROPEEN

(11) **EP 4 116 610 B1**
(45) Date de publication et mention de la délivrance du brevet: **17.04.2024**
(21) Numéro de dépôt: 22179801.0
(22) Date de dépôt: 20.06.2022
(51) Int. Cl.: F16K 11/00, E03C 1/04, E03C 1/05, F16K 27/12

(54) **ROBINET A ASSEMBLAGE SIMPLIFIE ET PROCEDE D'ASSEMBLAGE ASSOCIE**
ARMATUR MIT VEREINFACHTER MONTAGE UND ENTSPRECHENDES MONTAGEVERFAHREN
FAUCET WITH SIMPLIFIED ASSEMBLY AND ASSOCIATED ASSEMBLY METHOD

(30) Priorité: 06.07.2021 FR 2107289
(43) Date de publication de la demande: 11.01.2023
(73) Titulaire: Delabie, 80130 Friville Escarbotin (FR)
(72) Inventeur: TESTORI, Nicolas, 80860 NOYELLES SUR MER (FR)
(74) Mandataire: Cabinet Chaillot

(56) Documents cités:
- DE-U1-202012 104 023
- JP-A- H07 229 183

## Description

La présente invention concerne le domaine des robinets, et porte en particulier sur un robinet à assemblage simplifié et sur un procédé d'assemblage associé.

Les robinets pour appareil sanitaire, tels que les robinets de lavabo, sont généralement constitués de plusieurs pièces telles qu'une enveloppe externe, un corps interne, un chapeau (comportant facultativement un détecteur de présence), un brise-jet ou aérateur, une clé de mélange (dans le cas d'un robinet mitigeur), etc. Les robinets existants comportent en outre plusieurs composants de fixation pour assembler les différentes pièces du robinet entre elles. Les robinets existants ont ainsi les inconvénients suivants : ils sont généralement compliqués à assembler, ils ne sont pas aisément démontables notamment pour effectuer des opérations de maintenance, et ils sont onéreux à fabriquer étant donné le nombre important de composants qu'ils possèdent.

Le document JPH07229183A décrit un robinet selon l'état antérieur de la technique.

La présente invention vise à résoudre les inconvénients de l'état antérieur de la technique, en proposant un robinet dont l'assemblage est simplifié par emboîtement des différentes pièces du robinet entre elles, ce qui permet de faciliter l'assemblage et l'installation du robinet, de faciliter le démontage du robinet notamment pour réaliser des opérations de maintenance (par exemple, pour changer une pile dans le cas d'un robinet à commande électronique, ou pour déboucher un filtre dans le robinet), et de réduire le coût du robinet.

La présente invention a donc pour objet un robinet comprenant : un corps interne dont la partie inférieure est configurée pour être reliée à au moins un tuyau d'arrivée d'eau ; une enveloppe externe possédant une ouverture supérieure, une ouverture inférieure et un orifice latéral ménagé sous l'ouverture supérieure, le corps interne étant configuré pour être inséré dans l'enveloppe externe par l'intermédiaire de l'ouverture inférieure de l'enveloppe externe ; un chapeau configuré pour être monté dans l'ouverture supérieure de l'enveloppe externe ; et un support brise-jet configuré pour porter un brise-jet et pour être inséré dans l'enveloppe externe par l'intermédiaire de l'orifice latéral de l'enveloppe externe ; caractérisé par le fait que : le support brise-jet comporte au moins deux nervures externes longitudinales aptes à s'emboîter, lorsque le chapeau est monté dans l'ouverture supérieure de l'enveloppe externe et que le support brise-jet est inséré à travers l'orifice latéral de l'enveloppe externe, dans au moins deux mortaises situées dans la partie inférieure du chapeau, de telle sorte que le support brise-jet verrouille la position du chapeau dans l'enveloppe externe ; lorsque le support brise-jet est emboîté dans le chapeau, la partie supérieure du corps interne est configurée pour s'emboîter dans la partie inférieure du support brise-jet lorsque le corps interne est inséré à travers l'ouverture inférieure de l'enveloppe externe, de telle sorte que le corps interne verrouille la position du support brise-jet dans l'enveloppe externe ; et un alésage est ménagé radialement dans le corps interne, et un trou traversant latéral est ménagé dans l'enveloppe externe, ledit trou traversant latéral étant en regard dudit alésage lorsque le corps interne est installé dans l'enveloppe externe, au moins l'un dudit trou traversant latéral et dudit alésage étant taraudé, le robinet comprenant en outre une vis de blocage configurée pour être insérée dans ledit trou traversant latéral et ledit alésage lorsque le corps interne est installé dans l'enveloppe externe de manière à verrouiller la position du corps interne dans l'enveloppe externe, l'axe dudit alésage et dudit trou traversant latéral étant préférablement dans un plan horizontal par rapport à la base du corps interne et de l'enveloppe externe.

Ainsi, certaines des pièces du robinet, en plus de leur fonction propre, possèdent une fonction de verrouillage d'une autre pièce du robinet. En particulier, le support brise-jet permet le verrouillage de la position du chapeau dans l'ouverture supérieure de l'enveloppe externe, le corps interne permet le verrouillage de la position du support brise-jet dans l'enveloppe externe, et la vis de blocage, vissée de préférence à l'arrière de l'enveloppe externe, permet le verrouillage de la position du corps interne dans l'enveloppe externe, permettant ainsi le verrouillage de l'ensemble de ces pièces dans l'enveloppe externe du robinet.

L'utilisation de pièces dites multifonctions permet ainsi de simplifier le montage du robinet et de limiter le nombre de composants dans le robinet, ce qui permet d'obtenir un robinet peu onéreux.

En outre, cette configuration de verrouillage du robinet permet de déshabiller très facilement le corps interne du robinet en retirant tout d'abord la vis de blocage, puis en retirant l'enveloppe externe, le support brise-jet et le chapeau, tout en laissant le corps interne du robinet en place sur l'appareil sanitaire (par exemple, un lavabo) sur lequel le robinet est installé, ce qui permet de faciliter les opérations de maintenance sur le robinet.

Le corps interne est, de préférence, réalisé en matériau composite, tandis que l'enveloppe externe est, de préférence, métallique.

Selon une caractéristique particulière de l'invention, l'enveloppe externe comporte une nervure interne longitudinale possédant une mortaise disposée en regard de l'orifice latéral de l'enveloppe externe, le support brise-jet possédant un tenon configuré pour s'emboîter dans la mortaise de l'enveloppe externe.

Ainsi, la nervure interne longitudinale de l'enveloppe interne peut s'insérer dans une rainure externe longitudinale formée sur le corps interne lors de l'insertion du corps interne dans l'ouverture inférieure de l'enveloppe externe, de manière à garantir le bon positionnement du corps interne à l'intérieur de l'enveloppe externe.

De préférence, la lèvre supérieure de la mortaise est légèrement inclinée pour assurer un parfait serrage du chapeau sur l'enveloppe externe lorsque le tenon du support brise-jet pénètre dans la mortaise.

De préférence, le trou latéral traversant de l'enveloppe externe recevant la vis de blocage traverse la nervure interne longitudinale de l'enveloppe externe et est taraudé, et la vis de blocage se prolonge par un téton qui, en s'emboîtant dans l'alésage du corps interne, assure le verrouillage de l'enveloppe externe sur le corps interne. Selon une caractéristique particulière de l'invention, la partie inférieure du support brise-jet possède une entrée d'eau cylindrique, et l'extrémité supérieure du corps interne possède une sortie d'eau cylindrique, l'entrée d'eau cylindrique du support brise-jet étant configurée pour s'emboîter de manière étanche dans la sortie d'eau cylindrique du corps interne.

Ainsi, lorsque le robinet est actionné, l'eau provenant de l'au moins un tuyau d'arrivée d'eau pénètre dans la partie inférieure du corps interne, puis sort de la sortie d'eau cylindrique du corps interne et entre dans l'entrée d'eau cylindrique du support brise-jet, et enfin sort du robinet par l'intermédiaire de son brise-jet disposé au niveau de l'orifice latéral de l'enveloppe externe.

L'emboîtement de l'entrée d'eau cylindrique du support brise-jet dans la sortie d'eau cylindrique du corps interne permet ainsi de garantir une liaison étanche entre le corps interne et le support brise-jet, mais également le verrouillage du support brise-jet dans l'enveloppe externe du robinet.

Selon une caractéristique particulière de l'invention, le robinet comprend en outre une plaque de retenue de tuyau configurée pour être insérée dans une fente horizontale ménagée en partie inférieure du corps interne, ladite plaque de retenue de tuyau possédant au moins une encoche configurée, lorsque ladite plaque est insérée dans ladite fente horizontale, pour coopérer avec une gorge ménagée à la sortie de l'au moins un tuyau d'arrivée d'eau, de telle sorte que ladite plaque de retenue de tuyau verrouille la position de l'au moins un tuyau d'arrivée d'eau dans le corps interne.

Ainsi, avant insertion du corps interne dans l'enveloppe externe, lorsque la sortie de l'au moins un tuyau d'arrivée d'eau est insérée en partie inférieure du corps interne, la plaque de retenue de tuyau (également appelée « fourchette ») peut être coulissée dans la fente horizontale ménagée dans le corps interne jusqu'à ce que le bord de l'au moins une encoche de ladite plaque pénètre dans la gorge ménagée à la sortie de l'au moins un tuyau d'arrivée d'eau, permettant ainsi de verrouiller le ou les tuyaux d'arrivée d'eau dans le corps interne tout en les laissant libres en rotation.

L'enveloppe externe vient ensuite coiffer la plaque de retenue de tuyau et la maintient enfoncée dans la fente horizontale du corps interne.

La plaque de retenue de tuyau est, de préférence, réalisée en acier inoxydable.

De préférence, la fente horizontale est située en dessous de l'alésage du corps interne recevant la vis de blocage. Selon une caractéristique particulière de l'invention, la plaque de retenue de tuyau possède en outre au moins un trou taraudé, et la partie inférieure du corps interne possède en outre au moins un orifice situé en regard de l'au moins un trou taraudé de la plaque de retenue de tuyau lorsque la plaque de retenue de tuyau est insérée dans la fente horizontale du corps interne, le robinet comprenant en outre au moins une tige filetée configurée pour pénétrer dans l'au moins un orifice du corps interne et venir se visser dans l'au moins un trou taraudé de la plaque de retenue de tuyau, de manière à permettre à la fois la fixation de la plaque de retenue de tuyau dans le corps interne et la fixation du corps interne sur un appareil sanitaire tel qu'un lavabo.

Ainsi, l'au moins un trou taraudé de la plaque de retenue de tuyau permet de recevoir l'au moins une tige filetée de manière à verrouiller la plaque de retenue de tuyau dans le corps interne. Chaque tige filetée a par ailleurs une longueur suffisante pour permettre la fixation du corps interne du robinet, à l'aide d'un écrou, sur un appareil sanitaire tel qu'un lavabo.

Selon une caractéristique particulière de l'invention, dans le cas d'un robinet mitigeur, la partie inférieure du corps interne est configurée pour être reliée à un tuyau d'arrivée d'eau froide et à un tuyau d'arrivée d'eau chaude, le robinet comprenant en outre une clé de mélange insérée, par l'intermédiaire d'un trou traversant latéral formé dans l'enveloppe externe, dans un logement transversal formé dans le corps interne, l'alésage du corps interne débouchant dans le logement transversal du corps interne de telle sorte que ladite clé de mélange est apte à être verrouillée dans le corps interne à l'aide de la vis de blocage, ledit trou traversant latéral et ledit logement transversal dans lesquels est insérée la clé de mélange étant disposés orthogonalement par rapport à la vis de blocage.

De préférence, l'extrémité de la vis de blocage située à l'intérieur du corps interne pénètre dans une gorge ménagée dans la clé de mélange pour assurer concomitamment le verrouillage de cette dernière et la fixation de l'enveloppe externe sur le corps interne.

Ainsi, l'unique vis de blocage permet de verrouiller ensemble l'enveloppe externe, le corps interne et la clé de mélange, tout en permettant la rotation de la clé de mélange dans le corps interne afin de pouvoir choisir la température de l'eau en sortie du robinet mitigeur.

Il est à noter que, dans le cas d'un robinet simple non-mitigeur, il n'y a qu'un seul tuyau d'arrivée d'eau et le robinet ne possède pas de clé de mélange. La vis de blocage pénètre alors simplement dans un logement du corps interne. De préférence, le logement transversal sensiblement horizontal recevant la clé de mélange est ménagé au-dessus de la sortie des tuyaux (ou « flexibles ») d'arrivée d'eau. Selon une caractéristique particulière de l'invention, le chapeau comprend un circuit électronique de détection de présence.

Ainsi, le chapeau peut également servir de tête de détection de présence, de manière à déclencher l'écoulement d'eau uniquement en cas de détection d'une présence à proximité du robinet.

Le circuit électronique de détection de présence peut, par exemple, être un capteur infrarouge.

Selon une caractéristique particulière de l'invention, le corps interne comprend, en partie supérieure, une électrovanne pilotée par le circuit électronique de détection de présence, l'extrémité supérieure de ladite électrovanne étant configurée pour s'emboîter sur un tube d'entrée d'eau ménagé à la partie inférieure du support brise-jet.

De préférence, la dite électrovanne, à entrée et sortie en ligne, est rendue solidaire du corps interne par vissage. L'entrée d'eau inférieure de l'électrovanne est fixée dans le corps interne en regard de son canal d'arrivée de fluide qui communique avec l'au moins un tuyau d'arrivée d'eau, tandis que la sortie d'eau supérieure de l'électrovanne pénètre dans l'entrée d'eau du support brise-jet. L'électrovanne permet de déclencher l'écoulement d'eau pendant une durée prédéterminée lorsque le circuit électronique de détection de présence du chapeau détecte une présence.

La présente invention a également pour objet un procédé d'assemblage d'un robinet tel que décrit ci-dessus, caractérisé par le fait qu'il comprend les étapes suivantes : a) monter le chapeau dans l'ouverture supérieure de l'enveloppe externe ; b) insérer le support brise-jet à travers l'orifice latéral de l'enveloppe externe et emboîter le support brise-jet dans la partie inférieure du chapeau, de telle sorte que le support brise-jet verrouille la position du chapeau dans l'enveloppe externe ; c) insérer le corps interne à travers l'ouverture inférieure de l'enveloppe externe et emboîter la partie supérieure du corps interne dans la partie inférieure du support brise-jet, de telle sorte que le corps interne verrouille la position du support brise-jet dans l'enveloppe externe ; et d) insérer la vis de blocage dans le trou traversant latéral de l'enveloppe externe et l'alésage du corps interne de manière à verrouiller la position du corps interne dans l'enveloppe externe.

Selon une caractéristique particulière de l'invention, le procédé d'assemblage comprend en outre, entre les étapes b) et c), l'étape suivante : c1) insérer l'électrovanne dans le corps interne, puis insérer successivement l'au moins un tuyau d'arrivée d'eau, la plaque de retenue et l'au moins une tige filetée dans le corps interne.

Selon une caractéristique particulière de l'invention, le procédé d'assemblage comprend en outre, entre l'étape c) et d), l'étape suivante : d1) insérer la clé de mélange dans le logement transversal du corps interne.

Pour mieux illustrer l'objet de la présente invention, on va en décrire ci-après, à titre illustratif et non limitatif, un mode de réalisation préféré, avec référence aux dessins annexés.

Sur ces dessins :
[Fig. 1] est une vue éclatée d'un robinet selon la présente invention ;
[Fig. 2] est une vue en coupe de la partie supérieure du robinet avant l'insertion du support brise-jet ;
[Fig. 3] est une vue en coupe longitudinale du robinet ;
[Fig. 4] est une vue en coupe transversale du robinet au niveau de la clé de mélange ;
[Fig. 5] est une vue éclatée de la partie inférieure du robinet sans enveloppe externe ;
[Fig. 6] est une vue en perspective de la partie inférieure du robinet ; et
[Fig. 7] est une vue en perspective du tuyau d'arrivée d'eau froide et du tuyau d'arrivée d'eau chaude en prise avec la plaque de retenue de tuyau du robinet.

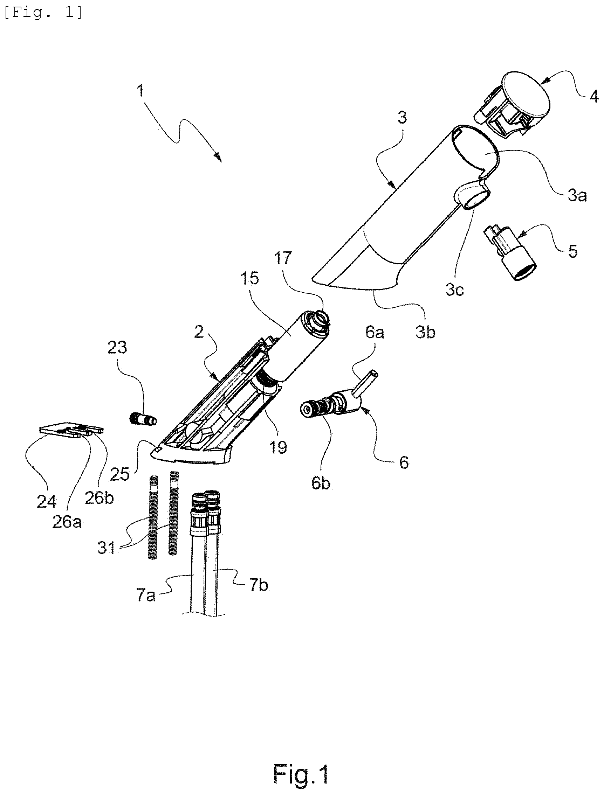

Si l'on se réfère aux Figures 1 à 7, on peut voir qu'il y est représenté un robinet 1 selon la présente invention.

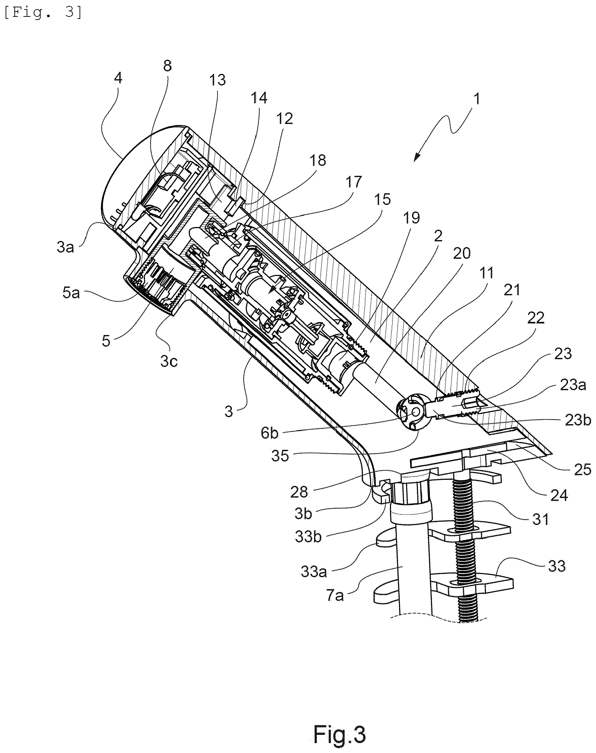

Le robinet 1 est un robinet mitigeur comprenant un corps interne 2, une enveloppe externe 3, un chapeau 4, un support brise-jet 5 intégrant un logement 5a pour brise-jet ou aérateur (visible sur la Figure 3), et une clé de mélange 6.

Il est à noter que le robinet 1 pourrait également être un robinet non-mitigeur sans clé de mélange, sans s'écarter du cadre de la présente invention.

Le corps interne 2 est une pièce sensiblement cylindrique, de préférence en matériau composite, configurée pour être reliée, en partie inférieure, à un tuyau d'arrivée d'eau chaude 7a et à un tuyau d'arrivée d'eau froide 7b. L'enveloppe externe 3 est une pièce sensiblement tubulaire, de préférence métallique, possédant une ouverture supérieure 3a, une ouverture inférieure 3b et un orifice latéral 3c en forme de bec ménagé sous l'ouverture supérieure 3a.

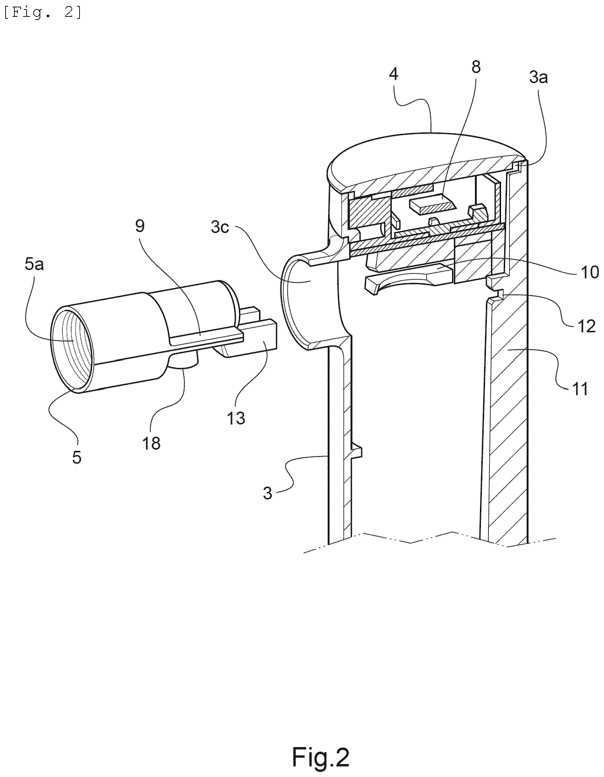

Le chapeau 4 est un bouchon sensiblement cylindrique configuré pour être monté dans l'ouverture supérieure 3a de l'enveloppe externe 3. Dans le mode de réalisation illustré, le chapeau 4 contient, à l'intérieur de celui-ci, un circuit électronique de détection de présence 8 (visible sur les Figures 2 et 3) comprenant, par exemple, un capteur infrarouge.

Le chapeau 4 est inséré dans l'ouverture supérieure 3a de l'enveloppe externe 3 jusqu'à ce que sa partie supérieure circulaire vienne en butée contre l'extrémité supérieure 3a de l'enveloppe externe 3.

Tel que représenté à la Figure 2, le support brise-jet 5 comporte deux nervures externes longitudinales 9 aptes à s'emboîter, une fois que le chapeau 4 est monté dans l'ouverture supérieure 3a de l'enveloppe externe 3 et que le support brise-jet 5 est inséré à travers l'orifice latéral 3c de l'enveloppe externe 3, dans au moins deux mortaises 10 situées dans la partie inférieure du chapeau 4, de telle sorte que le support brise-jet 5 peut verrouiller la position du chapeau 4 dans l'enveloppe externe 3.

L'enveloppe externe 3 comporte une nervure interne longitudinale 11 possédant en partie supérieure une mortaise 12 disposée en regard de l'orifice latéral 3c de l'enveloppe externe 3.

Le support brise-jet 5 possède en outre, au niveau de son extrémité interne, deux parois verticales espacées 13 entre lesquelles est ménagé un tenon horizontal 14 (visible sur la Figure 3) configuré pour s'emboîter dans la mortaise 12 de l'enveloppe externe 3, les deux parois verticales 13 du support brise-jet 5 venant se placer de part et d'autre de la nervure interne longitudinale 11 de l'enveloppe externe 3.

La lèvre supérieure de la mortaise 12 est légèrement inclinée pour assurer un parfait serrage du chapeau 4 sur l'enveloppe externe 3 lorsque le tenon 14 du support brise-jet 5 pénètre dans la mortaise 12.

Le corps interne 2 possède, en partie supérieure, une électrovanne 15, à entrée et sortie en ligne, pilotée par le circuit électronique de détection de présence 8 du chapeau 4.

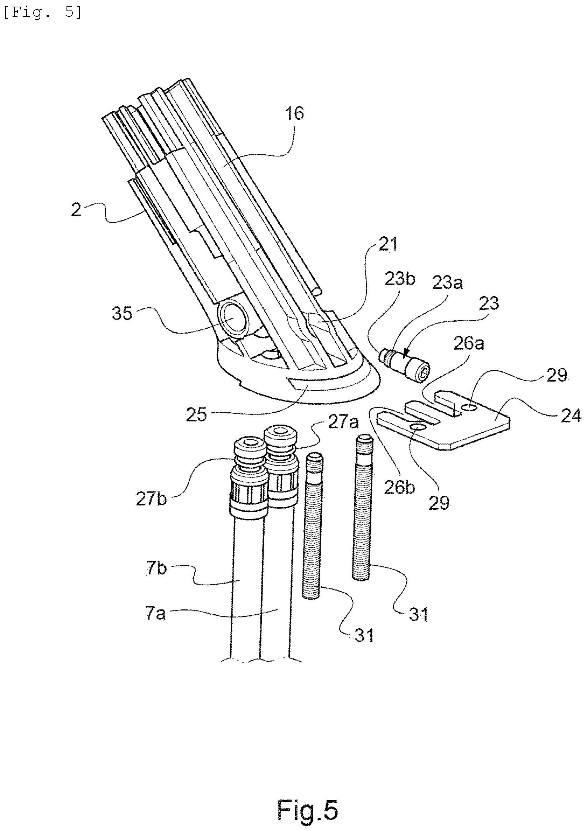

Une fois que le support brise-jet 5 est emboîté dans la partie inférieure du chapeau 4, le corps interne 2 peut être inséré dans l'enveloppe externe 3 par l'intermédiaire de l'ouverture inférieure 3b de l'enveloppe externe 3, en insérant la nervure interne longitudinale 11 de l'enveloppe externe 3 dans une rainure externe longitudinale 16 (visible sur la Figure 5) formée sur le corps interne 2 de manière à garantir le bon positionnement du corps interne 2 à l'intérieur de l'enveloppe externe 3, moyennant quoi l'embout cylindrique supérieur de sortie d'eau 17 de l'électrovanne 15 vient s'emboîter de manière étanche dans un tube d'entrée d'eau 18 ménagé en partie inférieure du support brise-jet 5, de telle sorte que le corps interne 2, à savoir son électrovanne 15, verrouille la position du support brise-jet 5 dans l'enveloppe externe 3. Préférablement, l'extrémité inférieure d'entrée d'eau 19 de l'électrovanne 15 est fixée par vissage dans le corps interne 2 en regard d'un canal d'arrivée de fluide 20 (visible sur la Figure 3) du corps interne 2 qui communique avec les sorties des tuyaux d'arrivée d'eau 7a et 7b. L'électrovanne 15 permet de déclencher un écoulement d'eau du robinet 1 pendant une durée prédéterminée lorsque le circuit électronique de détection de présence 8 du chapeau 4 détecte une présence.

Un alésage 21 est ménagé radialement à l'arrière du corps interne 2, et un trou traversant latéral taraudé 22 est ménagé à l'arrière de l'enveloppe externe 3 dans sa nervure interne longitudinale 11, ledit trou traversant latéral taraudé 22 étant en regard dudit alésage 21 lorsque le corps interne 2 est installé dans l'enveloppe externe 3.

Le robinet 1 comprend en outre une vis de blocage 23 configurée pour être insérée dans ledit trou traversant latéral taraudé 22 et ledit alésage 21 une fois que le corps interne 2 est installé dans l'enveloppe externe 3, de manière à verrouiller la position du corps interne 2 dans l'enveloppe externe 3.

De préférence, et comme représenté sur les dessins, l'axe dudit alésage 21 et dudit trou traversant latéral 22 est dans un plan horizontal par rapport à la base du corps interne 2 et de l'enveloppe externe 3.

La vis de blocage 23 possède une partie filetée 23a qui se prolonge par un téton 23b qui, en s'emboîtant dans l'alésage 21 du corps interne 2, assure le verrouillage de l'enveloppe externe 3 sur le corps interne 2.

Le robinet 1 comprend en outre une plaque de retenue de tuyau 24 (également appelée « fourchette »), de préférence en acier inoxydable, configurée pour être insérée, avant l'insertion du corps interne 2 dans l'enveloppe externe 3, dans une fente horizontale 25 ménagée en partie inférieure du corps interne 2 en dessous de l'alésage 21 recevant la vis de blocage 23.

La plaque de retenue de tuyau 24 possède deux encoches 26a et 26b.

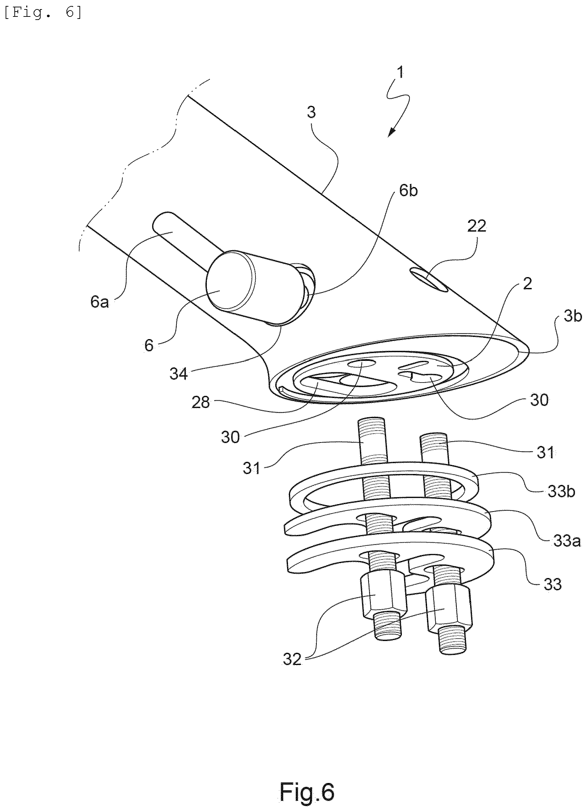

L'extrémité inférieure du corps interne 2 possède un orifice de passage de tuyaux 28 (visible sur la Figure 6) qui permet l'insertion des sorties des tuyaux d'arrivée d'eau 7a et 7b à l'intérieur du corps interne 2 en regard de deux sièges d'arrivée d'eau.

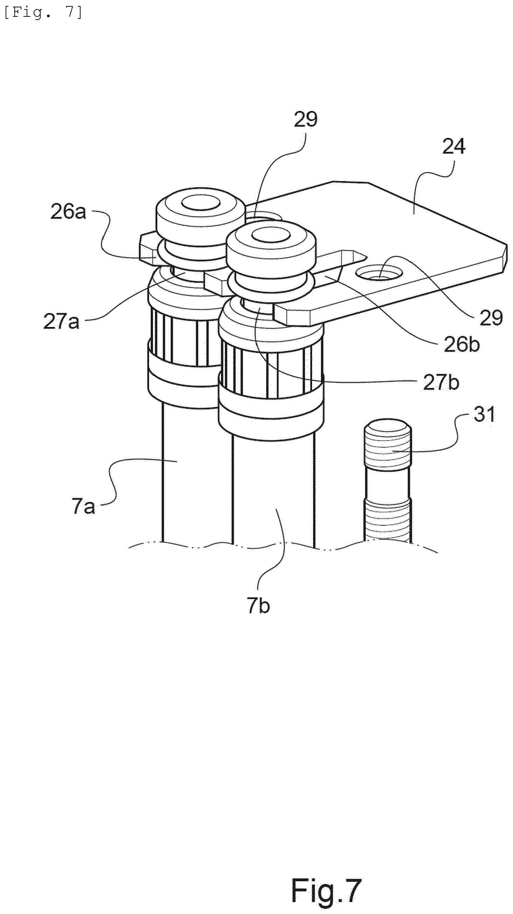

Tel que représenté à la Figure 7, lorsque les sorties des tuyaux 7a et 7b sont insérées dans le corps interne 2 et que la plaque 24 est insérée dans la fente horizontale 25 du corps interne 2, l'encoche 26a de la plaque 24 coopère avec une gorge 27a ménagée à la sortie du tuyau d'arrivée d'eau chaude 7a, et l'encoche 26b de la plaque 24 coopère avec une gorge 27b ménagée à la sortie du tuyau d'arrivée d'eau froide 7b, de telle sorte que la plaque de retenue de tuyau 24 verrouille la position des tuyau d'arrivée d'eau 7a et 7b dans le corps interne 2 tout en les laissant libres en rotation.

L'enveloppe externe 3 vient ensuite coiffer la plaque de retenue de tuyau 24 pour la maintenir enfoncée dans la fente horizontale 25 du corps interne 2.

La plaque de retenue de tuyau 24 possède en outre deux trous taraudés 29, et l'extrémité inférieure du corps interne 2 possède en outre deux orifices supplémentaires 30 (visibles sur la Figure 6) situés en regard des deux trous taraudés 29 de la plaque de retenue de tuyau 24 lorsque cette dernière est insérée dans la fente horizontale 25 du corps interne 2.

Le robinet comprend en outre deux tiges filetées 31 configurées pour pénétrer dans les deux orifices supplémentaires 30 du corps interne 2 et venir se visser dans les deux trous taraudés 29 de la plaque de retenue de tuyau 24, de manière à permettre à la fois la fixation de la plaque de retenue de tuyau 24 dans le corps interne 2 et la fixation du corps interne 2 sur un appareil sanitaire, tel qu'un lavabo, à l'aide de deux écrous 32 (visibles sur la Figure 6) vissés sur les deux tiges filetées 31 avec interposition d'une rondelle 33 en forme de fer à cheval, jusqu'à venir en butée contre la face inférieure de l'appareil sanitaire.

Un joint 33a en forme de fer à cheval et un joint 33b annulaire, destiné à se positionner dans une gorge correspondante formée sous le corps interne 2, sont en outre prévus pour être disposés de part et d'autre de l'appareil sanitaire.

La clé de mélange 6 du robinet mitigeur 1 possède un levier de commande 6a relié de manière sensiblement perpendiculaire à un axe rotatif 6b inséré, par l'intermédiaire d'un trou traversant latéral 34 formé dans l'enveloppe externe 3, dans un logement transversal 35 formé dans le corps interne 2 au-dessus des sorties des tuyaux d'arrivée d'eau 7a et 7b.

La clé de mélange 6 permet de régler la température de l'eau s'écoulant du robinet 1 en fonction de la position angulaire de l'axe rotatif 6b dans le logement transversal 35 du corps interne 2, ledit logement transversal 35 communiquant à la fois avec les sorties des tuyaux d'arrivée d'eau 7a et 7b et avec le canal d'arrivée de fluide 20 du corps interne 2.

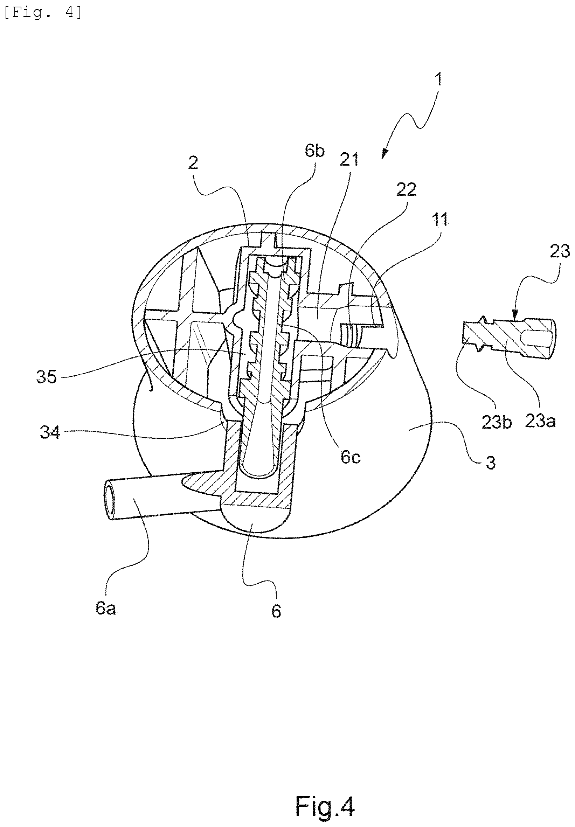

En outre, l'alésage 21 du corps interne 2 débouche dans le logement transversal 35 du corps interne 2 de telle sorte que l'axe rotatif 6b de la clé de mélange 6 est apte à être verrouillé en translation dans le corps interne 2 à l'aide de la vis de blocage 23 dont l'extrémité cylindrique 23b pénètre dans une gorge 6c (visible sur la Figure 4) ménagée sur la surface latérale de l'axe rotatif 6b de la clé de mélange 6, le trou traversant latéral 34 et le logement transversal 35 dans lesquels est insérée l'axe rotatif 6b de la clé de mélange 6 étant disposés orthogonalement par rapport à la vis de blocage 23.

Il est à noter que, dans le cas d'un robinet 1 simple non-mitigeur, il n'y a qu'un seul tuyau d'arrivée d'eau 7a et le robinet ne possède pas de clé de mélange 6, la vis de blocage 23 pénétrant alors simplement dans un logement du corps interne 2.

Le procédé d'assemblage du robinet 1 selon la présente invention est le suivant :
a) monter le chapeau 4 dans l'ouverture supérieure 3a de l'enveloppe externe 3 tel que représenté en Figure 2 ;
b) insérer le support brise-jet 5 à travers l'orifice latéral 3c de l'enveloppe externe 3 et emboîter les deux nervures externes longitudinales 9 du support brise-jet 5 dans les deux mortaises 10 du chapeau 4 puis emboîter le tenon 14 du support brise-jet 5 dans la mortaise 12 de l'enveloppe externe 3, de telle sorte que le support brise-jet 5 verrouille la position du chapeau 4 dans l'enveloppe externe 3 ;
c1) insérer l'électrovanne 15 dans le corps interne 2, puis insérer successivement les deux tuyaux d'arrivée d'eau 7a et 7b dans l'orifice 28 en partie inférieure du corps interne 2, la plaque de retenue de tuyau 24 dans la fente horizontale 25 du corps interne, et les deux tiges filetées 31 dans les deux orifices 30 en partie inférieure du corps interne 2 ;
c) insérer le corps interne 2 à travers l'ouverture inférieure 3b de l'enveloppe externe 3 et emboîter l'embout supérieur 17 de l'électrovanne 15 du corps interne 2 sur le tube 18 en partie inférieure du support brise-jet 5, de telle sorte que le corps interne 2 verrouille la position du support brise-jet 5 dans l'enveloppe externe 3 ;
d1) insérer l'axe rotatif 6b de clé de mélange 6 dans le logement transversal 35 du corps interne 2 ; et
d) insérer la vis de blocage 23 dans le trou traversant latéral 22 de l'enveloppe externe 3 et l'alésage 21 du corps interne 2 de manière à verrouiller la position du corps interne 2 dans l'enveloppe externe 3, le téton 23b de la vis de blocage 23 venant se loger dans la gorge 6c de la clé de mélange 6 de manière à verrouiller en translation l'axe rotatif 6b de la clé de mélange 6.

En plus de faciliter l'assemblage du robinet 1, la configuration du robinet 1 permet également de déshabiller très facilement le corps interne 2 du robinet 1 en retirant tout d'abord la vis de blocage 23 puis la clé de mélange 6, puis en retirant le sous-ensemble assemblé comprenant l'enveloppe externe 3, le support brise-jet 5 et le chapeau 4, tout en laissant le corps interne 2 du robinet 1 en place sur l'appareil sanitaire (par exemple, un lavabo), ce qui permet de faciliter les opérations de maintenance sur le robinet 1.

Il est bien entendu que le mode de réalisation particulier qui vient d'être décrit a été donné à titre indicatif et non limitatif, et que des modifications peuvent être apportées sans que l'on s'écarte pour autant de la présente invention. Ainsi, une version de type fixation murale du robinet selon l'invention est également envisagée dans le cadre de la présente invention.

## Revendications

1. Robinet (1) comprenant :
- un corps interne (2) dont la partie inférieure est configurée pour être reliée à au moins un tuyau d'arrivée d'eau (7a, 7b) ;
- une enveloppe externe (3) possédant une ouverture supérieure (3a), une ouverture inférieure (3b) et un orifice latéral (3c) ménagé sous l'ouverture supérieure (3a), le corps interne (2) étant configuré pour être inséré dans l'enveloppe externe (3) par l'intermédiaire de l'ouverture inférieure (3b) de l'enveloppe externe (3) ;
- un chapeau (4) configuré pour être monté dans l'ouverture supérieure (3a) de l'enveloppe externe (3) ; et
- un support brise-jet (5) configuré pour porter un brise-jet et pour être inséré dans l'enveloppe externe (3) par l'intermédiaire de l'orifice latéral (3c) de l'enveloppe externe (3) ;
**caractérisé par le fait que** :
- le support brise-jet (5) comporte au moins deux nervures externes longitudinales (9) aptes à s'emboîter, lorsque le chapeau (4) est monté dans l'ouverture supérieure (3a) de l'enveloppe externe (3) et que le support brise-jet (5) est inséré à travers l'orifice latéral (3c) de l'enveloppe externe (3), dans au moins deux mortaises (10) situées dans la partie inférieure du chapeau (4), de telle sorte que le support brise-jet (5) verrouille la position du chapeau (4) dans l'enveloppe externe (3) ;
- lorsque le support brise-jet (5) est emboîté dans le chapeau (4), la partie supérieure du corps interne (2) est configurée pour s'emboîter dans la partie inférieure du support brise-jet (5) lorsque le corps interne (2) est inséré à travers l'ouverture inférieure (3b) de l'enveloppe externe (3), de telle sorte que le corps interne (2) verrouille la position du support brise-jet (5) dans l'enveloppe externe (3) ; et
- un alésage (21) est ménagé radialement dans le corps interne (2), et un trou traversant latéral (22) est ménagé dans l'enveloppe externe (3), ledit trou traversant latéral (22) étant en regard dudit alésage (21) lorsque le corps interne (2) est installé dans l'enveloppe externe (3), au moins l'un dudit trou traversant latéral (22) et dudit alésage (21) étant taraudé, le robinet (1) comprenant en outre une vis de blocage (23) configurée pour être insérée dans ledit trou traversant latéral (22) et ledit alésage (21) lorsque le corps interne (2) est installé dans l'enveloppe externe (3) de manière à verrouiller la position du corps interne (2) dans l'enveloppe externe (3), l'axe dudit alésage (21) et dudit trou traversant latéral (22) étant préférablement dans un plan horizontal par rapport à la base du corps interne (2) et de l'enveloppe externe (3).

2. Robinet (1) selon la revendication 1, **caractérisé par le fait que** l'enveloppe externe (3) comporte une nervure interne longitudinale (11) possédant une mortaise (12) disposée en regard de l'orifice latéral (3c) de l'enveloppe externe (3), le support brise-jet (5) possédant un tenon (14) configuré pour s'emboîter dans la mortaise (12) de l'enveloppe externe (3).

3. Robinet (1) selon l'une des revendications 1 et 2, **caractérisé par le fait que** la partie inférieure du support brise-jet (5) possède une entrée d'eau cylindrique, et l'extrémité supérieure du corps interne (2) possède une sortie d'eau cylindrique, l'entrée d'eau cylindrique du support brise-jet (5) étant configurée pour s'emboîter de manière étanche dans la sortie d'eau cylindrique du corps interne (2).

4. Robinet (1) selon l'une des revendications 1 à 3, **caractérisé par le fait que** le robinet (1) comprend en outre une plaque de retenue de tuyau (24) configurée pour être insérée dans une fente horizontale (25) ménagée en partie inférieure du corps interne (2), ladite plaque de retenue de tuyau (24) possédant au moins une encoche (26a, 26b) configurée, lorsque ladite plaque (24) est insérée dans ladite fente horizontale (25), pour coopérer avec une gorge (27a, 27b) ménagée à la sortie de l'au moins un tuyau d'arrivée d'eau (7a, 7b), de telle sorte que ladite plaque de retenue de tuyau (24) verrouille la position de l'au moins un tuyau d'arrivée d'eau (7a, 7b) dans le corps interne (2).

5. Robinet (1) selon la revendication 4, **caractérisé par le fait que** la plaque de retenue de tuyau (24) possède en outre au moins un trou taraudé (29), et la partie inférieure du corps interne (2) possède en outre au moins un orifice (30) situé en regard de l'au moins un trou taraudé (29) de la plaque de retenue de tuyau (24) lorsque la plaque de retenue de tuyau (24) est insérée dans la fente horizontale (25) du corps interne (2), le robinet (1) comprenant en outre au moins une tige filetée (31) configurée pour pénétrer dans l'au moins un orifice (30) du corps interne (2) et venir se visser dans l'au moins un trou taraudé (29) de la plaque de retenue de tuyau (24), de manière à permettre à la fois la fixation de la plaque de retenue de tuyau (24) dans le corps interne (2) et la fixation du corps interne (2) sur un appareil sanitaire tel qu'un lavabo.

6. Robinet (1) selon l'une des revendications 1 à 5, **caractérisé par le fait que**, dans le cas d'un robinet mitigeur, la partie inférieure du corps interne (2) est configurée pour être reliée à un tuyau d'arrivée d'eau chaude (7a) et à un tuyau d'arrivée d'eau froide (7b), le robinet (1) comprenant en outre une clé de mélange (6) insérée, par l'intermédiaire d'un trou traversant latéral (34) formé dans l'enveloppe externe (3), dans un logement transversal (35) formé dans le corps interne (2), l'alésage (21) du corps interne (2) débouchant dans le logement transversal (35) du corps interne (2) de telle sorte que ladite clé de mélange (6) est apte à être verrouillée dans le corps interne (2) à l'aide de la vis de blocage (23), ledit trou traversant latéral (34) et ledit logement transversal (35) dans lesquels est insérée la clé de mélange (6) étant disposés orthogonalement par rapport à la vis de blocage (23).

7. Robinet (1) selon l'une des revendications 1 à 6, **caractérisé par le fait que** le chapeau (4) comprend un circuit électronique de détection de présence (8).

8. Robinet (1) selon la revendication 7, **caractérisé par le fait que** le corps interne (2) comprend, en partie supérieure, une électrovanne (15) pilotée par le circuit électronique de détection de présence (8), l'extrémité supérieure de ladite électrovanne (15) étant configurée pour s'emboîter sur un tube d'entrée d'eau (18) ménagé à la partie inférieure du support brise-jet (5).

9. Procédé d'assemblage d'un robinet (1) selon l'une des revendications 1 à 8, **caractérisé par le fait qu'**il comprend les étapes suivantes :
a) monter le chapeau (4) dans l'ouverture supérieure (3a) de l'enveloppe externe (3) ;
b) insérer le support brise-jet (5) à travers l'orifice latéral (3c) de l'enveloppe externe (3) et emboîter le support brise-jet (5) dans la partie inférieure du chapeau (4), de telle sorte que le support brise-jet (5) verrouille la position du chapeau (4) dans l'enveloppe externe (3) ;
c) insérer le corps interne (2) à travers l'ouverture inférieure (3b) de l'enveloppe externe (3) et emboîter la partie supérieure du corps interne (2) dans la partie inférieure du support brise-jet (5), de telle sorte que le corps interne (2) verrouille la position du support brise-jet (5) dans l'enveloppe externe (3) ; et
d) insérer la vis de blocage (23) dans le trou traversant latéral (22) de l'enveloppe externe (3) et l'alésage (21) du corps interne (2) de manière à verrouiller la position du corps interne (2) dans l'enveloppe externe (3).

10. Procédé d'assemblage selon la revendication 9 en dépendance des revendications 5 et 8, **caractérisé par le fait qu'**il comprend en outre, entre les étapes b) et c), l'étape suivante :
c1) insérer l'électrovanne (15) dans le corps interne (2), puis insérer successivement l'au moins un tuyau d'arrivée d'eau (7a, 7b), la plaque de retenue de tuyau (24) et l'au moins une tige filetée (31) dans le corps interne (2).

11. Procédé d'assemblage selon la revendication 9 ou 10 en dépendance de la revendication 6, **caractérisé par le fait qu'**il comprend en outre, entre l'étape c) et d), l'étape suivante :
d1) insérer la clé de mélange (6) dans le logement transversal (35) du corps interne (2).

## Patentansprüche

1. Hahn (1), umfassend:
- einen inneren Körper (2), dessen unterer Abschnitt konfiguriert ist, um mit mindestens einer Wasserzufuhrleitung (7a, 7b) verbunden zu werden;
- eine äußere Hülle (3), die eine obere Öffnung (3a), eine untere Öffnung (3b) und eine seitliche Öffnung (3c), die unter der oberen Öffnung (3a) ausgebildet ist, besitzt, wobei der innere Körper (2) konfiguriert ist, um durch die untere Öffnung (3b) der äußeren Hülle (3) in die äußere Hülle (3) eingeführt zu werden;
- eine Kappe (4), die konfiguriert ist, um in der oberen Öffnung (3a) der äußeren Hülle (3) montiert zu werden; und
- einen Strahlreglerträger (5), der konfiguriert ist, um einen Strahlregler zu tragen und durch die seitliche Öffnung (3c) der äußeren Hülle (3) in die äußere Hülle (3) eingesetzt zu werden;
**dadurch gekennzeichnet, dass**:
- der Strahlreglerträger (5) mindestens zwei äußere Längsrippen (9) umfasst, die geeignet sind, um, wenn die Kappe (4) in der oberen Öffnung (3a) der äußeren Hülle (3) montiert wird, und dass der Strahlreglerträger (5) durch die seitliche Öffnung (3c) der äußeren Hülle (3) eingeführt ist, in mindestens zwei Nuten (10) eingepasst zu werden, die sich im unteren Teil der Kappe (4) befinden, sodass der Strahlreglerträger (5) die Position des Kappes (4) in der äußeren Hülle (3) verriegelt;
- wenn der Strahlreglerträger (5) in die Kappe (4) eingepasst ist, der obere Abschnitt des inneren Körpers (2) konfiguriert ist, um in den unteren Abschnitt des Strahlreglerträgers (5) eingepasst zu werden, wenn der innere Körper (2) durch die untere Öffnung (3b) der äußeren Hülle (3) eingeführt wird, sodass der innere Körper (2) die Position des Strahlreglerträgers (5) in der äußeren Hülle (3) verriegelt; und
- eine Bohrung (21) radial in dem inneren Körper (2) ausgebildet ist, und ein seitliches Durchgangsloch (22) in der äußeren Hülle (3) ausgebildet ist, wobei das seitliche Durchgangsloch (22) gegenüber der Bohrung (21) ausgerichtet ist, wenn der innere Körper (2) in der äußeren Hülle (3) installiert ist, mindestens eines von dem seitlichen Durchgangsloch (22) und der Bohrung (21) mit Innengewinde ist,
der Hahn (1) ferner umfassend eine Sicherungsschraube (23), die konfiguriert ist, um in das seitliche Durchgangsloch (22) und die Bohrung (21) eingeführt zu werden, wenn der innere Körper (2) in die äußere Hülle (3) installiert wird, um die Position des inneren Körpers (2) in der äußeren Hülle (3) zu verriegeln, wobei die Achse der Bohrung (21) und des seitlichen Durchgangslochs (22) vorzugsweise in einer horizontalen Ebene in Bezug auf die Basis des inneren Körpers (2) und der äußeren Hülle (3) ist.

2. Hahn (1) nach Anspruch 1, **dadurch gekennzeichnet, dass** die äußere Hülle (3) eine innere Längsrippe (11) umfasst, die eine Nut (12) besitzt, der gegenüber der seitlichen Öffnung (3c) der äußeren Hülle (3) angeordnet ist, wobei der Strahlreglerträger (5) einen Zapfen (14) besitzt, der konfiguriert ist, um in die Nut (12) der äußeren Hülle (3) eingepasst zu werden.

3. Hahn (1) nach einem der Ansprüche 1 oder 2, **dadurch gekennzeichnet, dass** der untere Abschnitt des Strahlreglerträgers (5) einen zylindrischen Wassereinlass besitzt und das obere Ende des inneren Körpers (2) einen zylindrischen Wasserauslass besitzt, wobei der zylindrische Wassereinlass des Strahlreglerträgers (5) konfiguriert ist, um abdichtend in den zylindrischen Wasserauslass des inneren Körpers (2) eingepasst zu werden.

4. Hahn (1) nach einem der Ansprüche 1 bis 3, **dadurch gekennzeichnet, dass** der Hahn (1) ferner eine Leitungshalteplatte (24) umfasst, die konfiguriert ist, um in einen horizontalen Schlitz (25) eingeführt werden kann, der in dem unteren Abschnitt des inneren Körpers (2) ausgebildet ist, wobei die Leitungshalteplatte (24) mindestens eine Kerbe (26a, 26b) besitzt, die konfiguriert ist, um, wenn die Platte (24) in den horizontalen Schlitz (25) eingeführt ist, mit einer Nut (27a, 27b) zusammenzuwirken, die an dem Auslass der mindestens einen Wasserzufuhrleitung (7a, 7b) ausgebildet ist, sodass die Leitungshalteplatte (24) die Position der mindestens einen Wasserzufuhrleitung (7a, 7b) in dem inneren Körper (2) verriegelt.

5. Hahn (1) nach Anspruch 4, **dadurch gekennzeichnet, dass** die Leitungshalteplatte (24) ferner mindestens ein Gewindeloch (29) aufweist und der untere Abschnitt des inneren Körpers (2) ferner mindestens eine Öffnung (30) besitzt, die sich gegenüber dem mindestens einen Gewindeloch (29) der Leitungshalteplatte (24) befindet, wenn die Leitungshalteplatte (24) in den horizontalen Schlitz (25) des inneren Körpers (2) eingeführt ist, der Hahn (1) umfassend ferner mindestens eine Gewindestange (31) umfasst, die konfiguriert ist, um in die mindestens eine Öffnung (30) des inneren Körpers (2) einzudringen und in das mindestens eine Gewindeloch (29) der Leitungshalteplatte (24) eingeschraubt zu werden, sodass sowohl die Befestigung der Leitungshalteplatte (24) in dem inneren Körper (2) als auch die Befestigung des inneren Körpers (2) an einem Sanitärgerät wie einem Waschbecken möglich ist.

6. Hahn (1) nach einem der Ansprüche 1 bis 5, **dadurch gekennzeichnet, dass** im Fall eines Mischhahns der untere Abschnitt des inneren Körpers (2) konfiguriert ist, um mit einer Warmwasserzufuhrleitung (7a) und einer Kaltwasserzufuhrleitung (7b) verbunden zu werden, wobei der Hahn (1) ferner einen Mischschlüssel (6) umfasst, der über ein seitliches Durchgangsloch (34), das in der äußeren Hülle (3) ausgebildet ist, in eine im inneren Körper (2) ausgebildete Querbohrung (35) eingesetzt wird, wobei die Bohrung (21) des inneren Körpers (2) in die Queraufnahme (35) des inneren Körpers (2) mündet, sodass der Mischschlüssel (6) geeignet ist, mittels der Feststellschraube (23) in dem inneren Körper (2) verriegelt zu werden, wobei das seitliche Durchgangsloch (34) und die Queraufnahme (35), in die der Mischschlüssel (6) eingeführt wird, orthogonal zu der Sicherungsschraube (23) angeordnet sind.

7. Hahn (1) nach einem der Ansprüche 1 bis 6, **dadurch gekennzeichnet, dass** die Kappe (4) eine elektronische Schaltung zur Anwesenheitserkennung (8) umfasst.

8. Wasserhahn (1) nach Anspruch 7, **dadurch gekennzeichnet, dass** der innere Körper (2) im oberen Abschnitt ein Magnetventil (15) umfasst, das von der elektronischen Schaltung zur Anwesenheitserfassung (8) gesteuert wird, wobei das obere Ende des Magnetventils (15) so konfiguriert ist, um auf eine Wasserzufuhrleitung (18) eingepasst zu werden, die in dem unteren Abschnitt des Strahlreglerträgers (5) ausgebildet ist.

9. Verfahren zum Zusammenbauen eines Hahns (1) nach einem der Ansprüche 1 bis 8, **dadurch gekennzeichnet, dass** es die folgenden Schritte umfasst:
a) Montieren der Kappe (4) in der oberen Öffnung (3a) der äußeren Hülle (3);
b) Einsetzen des Strahlreglerträgers (5) durch die äußere Öffnung (3c) der äußeren Hülle (3) und Einpassen des Strahlreglerträgers (5) in den unteren Abschnitt der Kappe (4), sodass der Strahlreglerträger (5) die Position der Kappe (4) in der äußeren Hülle (3) verdeckt;
c) Einsetzen des Inneren Körpers (2) durch die untere Öffnung (3b) der äußeren Hülle (3) und Einpassen des oberen Abschnitts des inneren Körpers (2) in den unteren Abschnitt des Strahlreglerträgers (5), sodass der innere Körper (2) die Position des Strahlreglerträgers (5) in der äußeren Hülle (3) verdeckt; und
d) Einsetzen der Sicherungsschraube (23) in das seitliche Durchgangsloch (22) der äußeren Hülle (3) und die Bohrung (21) des inneren Körpers (2), um die Position des inneren Körpers (2) in der äußeren Hülle (3) zu verriegeln.

10. Verfahren zum Zusammenbauen nach Anspruch 9 abhängig von den Ansprüchen 5 und 8, **dadurch gekennzeichnet, dass** es zwischen den Schritten b) und c) zusätzlich den folgenden Schritt umfasst:
c1) Einsetzen des Magnetventils (15) in den inneren Körper (2), dann nacheinander Einsetzen von mindestens einer Wasserzufuhrleitung (7a, 7b), der Leitungshalteplatte (24) und mindestens einer Gewindestange (31) in den inneren Körper (2).

11. Verfahren zum Zusammenbauen nach Anspruch 9 oder 10 abhängig von Anspruch 6, **dadurch gekennzeichnet, dass** es zwischen Schritt c) und d) zusätzlich den folgenden Schritt umfasst:
d1) Einsetzen des Mischschlüssels (6) in die Queraufnahme (35) des inneren Körpers (2).

## Claims

1. - A faucet (1) comprising :
- an inner body (2), the lower part of which is configured to be connected to at least one water inlet pipe (7a, 7b);
- an outer casing (3) having a top opening (3a), a bottom opening (3b) and a lateral orifice (3c) provided below the top opening (3a), the inner body (2) being configured to be inserted into the outer casing (3) via the bottom opening (3b) of the outer casing (3);
- a cap (4) configured to be mounted in the top opening (3a) of the outer casing (3); and
- an aerator fitting support (5) configured to carry an aerator fitting and to be inserted into the outer casing (3) via the lateral orifice (3c) of the outer casing (3);
**characterized in that** :
- the aerator fitting support (5) has at least two longitudinal outer ribs (9) capable of engaging, when the cap (4) is mounted in the top opening (3a) of the outer casing (3) and the aerator fitting support (5) is inserted through the lateral orifice (3c) of the outer casing (3), into at least two mortises (10) located in the lower part of the cap (4), so that the aerator fitting support (5) locks the position of the cap (4) in the outer casing (3);
- when the aerator fitting support (5) is engaged into the cap (4), the upper part of the inner body (2) is configured to engage into the lower part of the aerator fitting support (5) when the inner body (2) is inserted through the bottom opening (3b) of the outer casing (3), so that the inner body (2) locks the position of the aerator fitting support (5) in the outer casing (3); and
- a bore (21) is radially provided in the inner body (2), and a lateral through hole (22) is provided in the outer casing (3), said lateral through hole (22) facing said bore (21) when the inner body (2) is installed in the outer casing (3), at least one of said lateral through hole (22) and said bore (21) being threaded, the faucet (1) further comprising a locking screw (23) configured to be inserted into said lateral through hole (22) and said bore (21) when the inner body (2) is installed in the outer casing (3) so as to lock the position of the inner body (2) in the outer casing (3), the axis of said bore (21) and said lateral through hole (22) preferably being in a horizontal plane with respect to the base of the inner body (2) and the outer casing (3).

2. - A faucet (1) according to claim 1, **characterized in that** the outer casing (3) comprises a longitudinal inner rib (11) having a mortise (12) facing the lateral orifice (3c) of the outer casing (3), the aerator fitting support (5) having a pin (14) configured to engage into the mortise (12) of the outer casing (3).

3. - A faucet (1) according to one of claims 1 and 2, **characterized in that** the lower part of the aerator fitting support (5) has a cylindrical water inlet, and the upper end of the inner body (2) has a cylindrical water outlet, the cylindrical water inlet of the aerator fitting support (5) being configured to engage sealingly into the cylindrical water outlet of the inner body (2).

4. - A faucet (1) according to one of claims 1 to 3, **characterized in that** the faucet (1) further comprises a pipe retaining plate (24) configured to be inserted into a horizontal slot (25) provided at the lower part of the inner body (2), said pipe retaining plate (24) having at least one notch (26a, 26b) configured, when said plate (24) is inserted into said horizontal slot (25), to cooperate with a groove (27a, 27b) provided at the outlet of the at least one water inlet pipe (7a, 7b), so that said pipe retaining plate (24) locks the position of the at least one water inlet pipe (7a, 7b) in the inner body (2).

5. - A faucet (1) according to claim 4, **characterized in that** the pipe retaining plate (24) further has at least one tapped hole (29), and the lower part of the inner body (2) further has at least one orifice (30) facing the at least one tapped hole (29) of the pipe retaining plate (24) when the pipe retaining plate (24) is inserted into the horizontal slot (25) of the inner body (2), the faucet (1) further comprising at least one threaded rod (31) configured to penetrate the at least one orifice (30) of the inner body (2) and to screw into the at least one tapped hole (29) of the pipe retaining plate (24), so as to enable both the pipe retaining plate (24) to be secured in the inner body (2) and the inner body (2) to be secured to a sanitary appliance such as a washbasin.

6. - A faucet (1) according to one of claims 1 to 5, **characterized in that**, in the case of a mixer faucet, the lower part of the inner body (2) is configured to be connected to a hot water inlet pipe (7a) and a cold water inlet pipe (7b), the faucet (1) further comprising a mixing key (6) inserted, via a lateral through hole (34) formed in the outer casing (3), into a transverse housing (35) formed in the inner body (2), the bore (21) of the inner body (2) opening into the transverse housing (35) of the inner body (2) so that said mixing key (6) is capable of being locked in the inner body (2) using the locking screw (23), said lateral through hole (34) and said transverse housing (35), in which the mixing key (6) is inserted, being arranged orthogonally to the locking screw (23).

7. - A faucet (1) according to one of claims 1 to 6, **characterized in that** the cap (4) comprises an electronic presence detection circuit (8).

8. - A faucet (1) according to claim 7, **characterized in that** the inner body (2) comprises, at the upper part, a solenoid valve (15) controlled by the electronic presence detection circuit (8), the upper end of said solenoid valve (15) being configured to engage onto a water inlet tube (18) provided at the lower part of the aerator fitting support (5).

9. - A method for assembling a faucet (1) according to one of claims 1 to 8, **characterized in that** it comprises the following steps:
a) installing the cap (4) in the top opening (3a) of the outer casing (3);
b) inserting the aerator fitting support (5) through the lateral orifice (3c) of the outer casing (3) and engage the aerator fitting support (5) into the lower part of the cap (4), so that the aerator fitting support (5) locks the position of the cap (4) in the outer casing (3);
c) inserting the inner body (2) through the bottom opening (3b) of the outer casing (3) and engaging the upper part of the inner body (2) into the lower part of the aerator fitting support (5), so that the inner body (2) locks the position of the aerator fitting support (5) in the outer casing (3); and
d) inserting the locking screw (23) into the lateral through hole (22) of the outer casing (3) and the bore (21) of the inner body (2) so as to lock the position of the inner body (2) in the outer casing (3).

10. - An assembly method according to claim 9 when dependent on claims 5 and 8, **characterized in that** it further comprises, between steps b) and c), the following step:
c1) inserting the solenoid valve (15) into the inner body (2), then successively inserting the at least one water inlet pipe (7a, 7b), the pipe retaining plate (24) and the at least one threaded rod (31) into the inner body (2).

11. - An assembly method according to claim 9 or 10 when dependent on claim 6, **characterized in that** it further comprises, between step c) and d), the following step:
d1) inserting the mixing key (6) into the transverse housing (35) of the inner body (2).
